# EUROPÄISCHE PATENTSCHRIFT

(11) **EP 3 402 660 B1**
(45) Veröffentlichungstag und Bekanntmachung des Hinweises auf die Patenterteilung: **06.10.2021**
(21) Anmeldenummer: 16781817.8
(22) Anmeldetag: 17.10.2016
(51) Int. Cl.: B29D 30/02, B29D 30/04, B60C 7/08

(54) **VERFAHREN ZUR HERSTELLUNG EINES VOLLGUMMIREIFENS, NACH DEM VERFAHREN HERGESTELLTER VOLLGUMMIREIFEN UND GRUNDKÖRPER FÜR EINEN VOLLGUMMIREIFEN**
METHOD FOR PRODUCING A SOLID RUBBER TYRE, SOLID RUBBER TYRE PRODUCED ACCORDING TO THE METHOD AND BASE BODY FOR A SOLID RUBBER TYRE
PROCÉDÉ DE FABRICATION D'UN PNEU PLEIN, PNEU PLEIN FABRIQUÉ SELON LE PROCÉDÉ ET CORPS DE BASE POUR UN PNEU PLEIN

(30) Priorität: 15.01.2016 DE 102016000298
(43) Veröffentlichungstag der Anmeldung: 21.11.2018
(73) Patentinhaber: Continental Reifen Deutschland GmbH, 30165 Hannover (DE)
(72) Erfinder: MÜLLER, Matthias-Stephan, 30827 Garbsen (DE); HALLMANN, Steffen, 30171 Hannover (DE); MINX, Carsten, 31535 Neustadt (DE); SCHMIDT, Peter, 31275 Lehrte (DE); HEINRICH, Nikolas, 30823 Garbsen (DE); ZIMMERMANN, Bernd, 31867 Landau (DE)
(74) Vertreter: Continental Corporation
(86) Internationale Anmeldenummer: PCT/EP2016/074844
(87) Internationale Veröffentlichungsnummer: WO 2017/121504

(56) Entgegenhaltungen:
- EP-A1- 0 556 491
- EP-A1- 1 574 361
- WO-A2-2013/061055
- DE-A1- 1 729 849
- DE-A1-102010 037 571
- DE-A1-102011 052 808

## Beschreibung

Die Erfindung betrifft ein Verfahren zur Herstellung eines Vollgummireifens für eine mobile Arbeitsmaschine, aus einem Grundkörper aus einem radial inneren, mit einer Felge in Kontakt kommenden Bodenteil und einem radial äußeren Elastikteil sowie mit einem Laufflächenteil und zwei seitlichen Reifenflanken, welche zumindest den Elastikteil seitlich bedecken, wobei der Bodenteil und der Elastikteil jeweils durch ein mehrlagiges Wickeln einer kalandrierten Kautschukmischung aufgebaut werden, und wobei der Laufflächenteil und die beiden seitlichen Reifenflanken ebenfalls aus Kautschukmischungen gebildet werden. Die Erfindung betrifft ferner einen Grundkörper zur Herstellung eines Vollgummireifens, welcher einen Bodenteil, einen Elastikteil, einen Laufflächenteil und seitliche Reifenflanken aufweist, welche Bestandteile aus Gummimaterialien bestehen.

Rohlinge für Vollgummireifen werden im Stand der Technik in einem Aufbauverfahren gefertigt, bei dem die einzelnen kalandrierten Kautschukmischungen für den Bodenteil, den Elastikteil und den Laufflächenteil nacheinander mehrlagig auf einer Wickelvorrichtung, einer Wickelaufnahme, gewickelt werden und die seitlichen Reifenflanken angedrückt werden. Anschließend wird der Reifenrohling in einer Heizform vulkanisiert, die im Laufflächenteil die gegebenenfalls vorgesehene Profilierung einprägt und dem Vollgummireifen die gewünschten Außenkonturen verleiht. Beim Einformen des Reifenrohlings in die Heizform und beim Heizprozess finden massive und nicht beeinflussbare Fließprozesse der verschiedenen Gummimischungen statt, sodass im fertig vulkanisierten Reifen eine Materialverteilung vorliegt, die nicht der gewünschten Fertigteilspezifikation entspricht. Dies hat zur Folge, dass die Eigenschaften der Vollgummireifen gewissen Schwankungen unterliegen, die durch den Fertigungsprozess bedingt sind. Bestimmte Fließprozesse können sogar dazu führen, dass Reifen verworfen werden müssen.

Die DE 10 2007 055 036 A1 offenbart einen die üblichen Bestandteile aufweisenden Vollgummireifen, in dessen Elastikschicht Hohlkugel enthalten sind. Bei dem aus der DE 10 2011 052 808 A1 bekannten, ebenfalls den üblichen Aufbau aufweisenden Vollgummireifen ist zusätzlich radial innerhalb des Laufflächenteils ein Druck oder Verformungen erfassender Sensor einbaut.

*Ferner offenbart die* DE 10 2010 037 571 A1 *eine Vorrichtung und ein Verfahren zur Herstellung eines Bodenteiles für einen Vollgummireifen, wobei der Bodenteil aus einer Gummi-unter-Kern-Lage, einer mittleren Kernlage und einer radial äußeren Deckschicht besteht. Die Vorrichtung umfasst einen Schwenkblock mit zwei Wickeltrommeln, eine Wickelanlage und eine Verlegeeinheit. Der Schwenkblock ist zwischen Wickelanlage und Verlegeeinheit positioniert und zwischen diesen verschwenkbar. Mittels der Wickelanlage werden die Gummi-unter-Kern-Lage und die Deckschicht zu den Wickeltrommlen geführt und auf dieser abgelegt. Die Verlegeinheit umfasst einen Drahtaufleger zur Zuführung und Ablage der Kernlage auf den Wickeltrommeln. Diese Maßnahmen sollen eine effiziente Vollgummireifenherstellung ermöglichen.*

*Des Weiteren ist aus der* DE 17 29 849 A1 *ein Verfahren zur Herstellung und Verbindung eines einteiligen Radkörpers aus Kunststoff mit einem Vollgummireifen bekannt. Im Zuge des Verfahrens wird der vulkanisierte Vollgummireifen als Formkern in eine Spritzgussform eingelegt. Nachfolgend wird in die Spritzgussform über Einspritzkanäle ein thermoplastischer Kunststoff eingefüllt, welcher sich formschlüssig mit dem Vollgummireifen verbinden und nach dem Aushärten den Radkörper, also eine Art Felge, bilden soll.*

*Darüber hinaus sind aus der* EP 1 574 361 A1 *ein Vollgummireifen und ein Verfahren zur Erneuerung des Laufflächenteiles des Vollgummireifens bekannt. Beim Verfahren wird ein abgefahrener Vollgummireifen in eine Form eingesetzt, in welcher zur Erneuerung, also zur Vervollständigung des abgeriebenen Laufflächenteiles, Polyurethan eingegossen wird. Der runderneuerte Vollgummireifen weist somit einen aus Polyurethan bestehenden radial äußeren Laufflächenteil auf.*

Der Erfindung liegt die Aufgabe zu Grunde, einen Vollgummireifen der eingangs genannten Art derart herstellen zu können, dass die Materialverteilung, insbesondere jene zwischen dem Laufflächenteil und dem Grundkörper, gezielt beeinflusst werden kann und die diesbezüglich erwünschte Materialverteilung im fertig vulkanisierten Vollgummireifen gegeben ist.

Gelöst wird die gestellte Aufgabe mittels des erfindungsgemäßen Verfahrens dadurch, dass der Vollgummireifen in einem zweistufigen Aufbauverfahren hergestellt wird,
wobei in der ersten Stufe der Grundkörper aufgebaut und vulkanisiert wird,
wobei in der zweiten Stufe der vulkanisierte Grundkörper mit dem Laufflächenteil und den seitlichen Reifenflanken komplettiert wird
und anschließend der Reifen nochmals vulkanisiert wird.

Durch das zweistufige Aufbauverfahren, bei welchem ein bereits vulkanisierter Grundkörper mit der Kautschukmischung des Laufflächenteils sowie mit den seitlichen Reifenflanken komplettiert und anschließend vulkanisiert wird, werden zwischen dem Laufflächenteil, den seitlichen Reifenflanken und dem vulkanisierten Grundkörper Bauteilgrenzen erzielt, die der Fertigteilspezifikation entsprechen und sodass die für den Laufflächenteil wichtige, optimale Materialverteilung vorliegt. Die Erfindung ermöglicht es beispielsweise, bei einer Herstellung des Laufflächenteils aus einer applikationspezifischen Kautschukmischung eine optimale Performance des Laufflächenteils sicherzustellen. Das Einschnürverhalten bestimmter Kautschukmischungen, insbesondere von Vollsilikamischungen zur Rollwiderstandsoptimierung oder von Synthesekautschukmischungen, wie es beim herkömmlichen Aufbauverfahren zwangsweise auftritt, wird vermieden.

Die gestellte Aufgabe wird ferner durch einen erfindungsgemäßen Grundkörper gelöst, welcher ein separates Bauteil ist, aus dem Bodenteil und dem Elastikteil besteht und vulkanisiert ist.

Die Erfindung stellt vulkanisierte, und zwar entweder vor- oder ausvulkanisierte, Grundkörper zur Verfügung, die gelagert und zu einem späteren Zeitpunkt zum fertigen Reifen aufgebaut werden können, wobei die Laufflächenmischung kundenspezifisch und einsatzspezifisch zu einem späteren Zeitpunkt gewählt werden kann. Auch eine Reduktion der zur vollständigen Vulkanisation des Vollgummireifens benötigten Energie ist erzielbar, vor allem dann wenn der Grundkörper am heizungskritischen Punkt bereits in der ersten Aufbaustufe ausvulkanisiert wurde.

Bei einer Ausführungsvariante der Erfindung wird in der zweiten Stufe auf den vulkanisierten Grundkörper der Laufflächenteil durch ein mehrmaliges Wickeln einer kalandrierten Kautschukmischung aufgebaut, die seitlichen Reifenflanken werden angedrückt und anschließend wird der komplett aufgebaute Reifen in einer Heizform vulkanisiert. Bei dieser Verfahrensvariante erfolgt die Komplettierung des Vollgummireifens mittels an sich bekannter und bewährter Verfahrensschritte.

Bei einer alternativen Ausführungsform des erfindungsgemäßen Verfahrens wird in der zweiten Stufe der vulkanisierte Grundkörper in eine Einspritzpresse eingebracht, der Laufflächenteil und die seitlichen Reifenflanken werden durch Einspritzen einer Kautschukmischung in die Einspritzpresse gebildet und der Reifen wird anschließend in der Presse vulkanisiert. Auch diese Verfahrensvariante gestattet auf einfache Weise die Herstellung eines qualitativ einwandfreien Vollgummireifens.

Wie bereits erwähnt, kann der in der ersten Stufe aufgebaute Grundkörper entweder vorvulkanisiert oder ausvulkanisiert werden. Ein Ausvulkanisieren der Grundkörper ist vor allem dann vorteilhaft, wenn diese über einen längeren Zeitraum gelagert werden sollen. Vorteilhafter Weise kann der Bodenteil und/oder der Elastikteil recyceltes Gummimaterial enthalten.

Die Erfindung betrifft ferner einen Vollgummireifen, welcher nach dem erfindungsgemäßen Verfahren hergestellt ist.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Querschnitt durch einen Vollgummireifen,
Fig. 2 einen Querschnitt durch einen Grundkörper des Vollgummireifens aus Fig. 1 und
Fig. 3 einen Querschnitt durch ein Beispiel eines herkömmlich gefertigten Vollgummireifens.

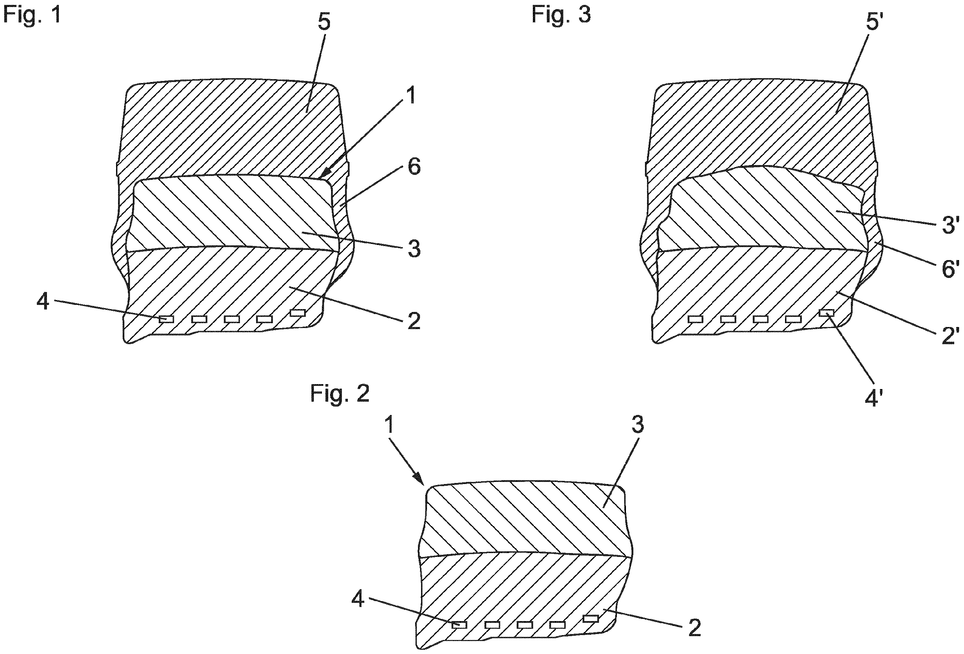

Vollgummireifen gemäß der Erfindung sind insbesondere Reifen für mobile Arbeitsmaschinen, wie Flurförderzeuge, beispielsweise Gabelstapler oder Telehandler. Gemäß dem in Fig. 1 gezeigten Querschnitt durch einen Vollgummireifen weist dieser einen Grundkörper 1 aus einem radial inneren Bodenteil 2 und einem auf diesem befindlichen Elastikteil 3 auf. Der Bodenteil 2 besteht üblicherweise aus einer harten Gummimischung und enthält zumindest ein zugfestes Insert, bei der dargestellten Ausführungsform mehrere in Umfangsrichtung des Reifens umlaufende zugfeste, metallische Kerne 4, und ist jener Teil des Reifens, welcher mit einer Felge in Kontakt kommt. Die Felge kann in herkömmlicher Weise ausgeführt sein, ist nicht Gegenstand der Erfindung und daher auch nicht dargestellt.

Der Elastikteil 3 bildet im Vollgummireifen eine elastische Zwischenschicht, deren Gummimaterial auf Federungs- und Dämpfungseigenschaften optimiert ist. Ein radial außerhalb des Grundkörpers 1 auf diesem befindlicher Laufflächenteil 5, welcher in an sich bekannter Weise mit einer Profilierung versehen sein kann, komplettiert gemeinsam mit seitlichen Reifenflanken 6 den Vollgummireifen. Die Reifenflanken 6 bedecken seitlich bzw. umschließen seitlich den Elastikteil 3 und bei der gezeigten Ausführung auch zumindest die radial äußeren Bereiche des Bodenteils 2.

Der Bodenteil 2, der Elastikteil 3, der Laufflächenteil 5 und die Reifenflanken 6 bestehen aus vulkanisierten Gummimaterialien, der Laufflächenteil 5 und die Reifenflanken 6 vorzugsweise aus dem gleichen Gummimaterial, die anderen Bestandteile aus voneinander verschiedenen Gummimaterialien und werden jeweils aus einer separaten, auf die erwünschten Eigenschaften des betreffenden Bauteils abgestimmten Kautschukmischung gefertigt.

Der Aufbau bzw. die Herstellung des unvulkanisierten Grundkörpers 1 erfolgt auf einer Wickelvorrichtung, insbesondere einer sogenannten Wickelaufnahme, auf welche vorerst eine in Umfangsrichtung des Reifens umlaufende Lage der für den Bodenteil 2 vorgesehenen, kalandrierten Kautschukmischung aufgebracht wird. Auf dieser Lage werden die Kerne 4 in der vorgesehenen Anzahl nebeneinander platziert. Anschließend wird der Bodenteil 2 durch Wickeln von weiteren Lagen der kalandrierten Kautschukmischung aufgebaut. Auf den Bodenteil 2 wird der Elastikteil 3 aus der für den Elastikteil 3 vorgesehenen und kalandrierten Kautschukmischung ebenfalls in mehreren Lagen gewickelt.

Der fertig aufgebaute, unvulkanisierte Grundkörper 1 wird in einer ersten Heizform, die dem Grundkörper 1 die erwünschte und vorgesehene Querschnittsgestalt vermittelt, vulkanisiert und kann dabei unter entsprechender Zufuhr von Wärme und bei entsprechender Temperatur entweder vorvulkanisiert oder ausvulkanisiert werden. Der vulkanisierte Grundkörper 1 wird der Heizform entnommen und kann nun nach Abkühlung in einer zweiten Aufbaustufe fertig aufgebaut werden.

Bei einer möglichen Variante wird der Grundkörper 1 außenseitig aufgeraut und mit einem üblichen Primer (Haftvermittler) behandelt. Der Grundkörper 1 wird auf eine felgenähnliche Wickelvorrichtung aufgespannt und es wird der Laufflächenteil 5 aus mehreren Lagen der entsprechenden kalandrierten Kautschukmischung aufgebaut. Die Mischungsteile der seitlichen Reifenflanken 6 werden angedrückt. Der fertig aufgebaute, mit dem rohen Laufflächenteil 5 und rohen seitlichen Reifenflanken 6 versehene Reifen wird in eine weitere Heizform eingebracht, um den Laufflächenteil 5 und die seitlichen Reifenflanken 6 zu vulkanisieren und diesen Bauteilen die vorgesehen Außenkontur zu verleihen, sodass schließlich der Vollgummireifen komplett vulkanisiert ist und der zweiten Heizform entnommen werden kann.

Bei einer weiteren Variante der Erfindung wird in der zweiten Stufe der vulkanisierte Grundkörper 1 in eine Einspritzpresse eingebracht, mit dem Laufflächenteil 5 und den seitlichen Reifenflanken 6 durch Einspritzen einer Kautschukmischung komplettiert und anschließend in der Presse vulkanisiert.

In Folge des zweistufigen Aufbaus und der zweistufigen Vulkanisation befinden sich zwischen dem Laufflächenteil 5 und den seitlichen Reifenflanken 6 auf der einen Seite und dem Grundkörper 1 auf der anderen Seite definierte Bauteilgrenzen und somit auch definierte Gummimaterialgrenzen. Es finden keine prozessbedingten Verformungen des vulkanisierten Grundkörper 1 mehr statt, wenn der Laufflächenteil 5 und die seitlichen Reifenflanken 6 angebracht und ebenfalls vulkanisiert werden. Dadurch können teure applikationsspezifisch ausgelegte Kautschukmischungen für den Laufflächenteil 5 optimal platziert werden. Die Erfindung ermöglicht auch die Verarbeitung von sogenannten Vollsilikamischungen und Synthesekautschukmischungen im Laufflächenteil 5 und den seitlichen Reifenflanken 6.

Der vulkanisierte Grundkörper 1 kann längere Zeit zwischengelagert werden und zu einem späteren Zeitpunkt und nach Kundenspezifikation mit dem Laufflächenteil und den Reifenflanken zum Vollgummireifen komplettiert werden. Möglich ist auch der Einsatz von recyceltem Gummimaterial bei der Herstellung des Bodenteils und/oder des Elastikteils.

Fig. 3 zeigt ein Beispiel eines nach dem üblichen Aufbauverfahren hergestellten Vollgummireifens mit einem Bodenteil 2' mit zugfesten Kernen 4', einem Elastikteil 3', einen Laufflächenteil 5' und Reifenflanken 6' im Querschnitt. Zu erkennen sind die undefiniert und in Folge von Fließvorgängen bei der Vulkanisation unregelmäßig verlaufenden Bauteilgrenzen zwischen dem Laufflächenteil 5' und dem Elastikteil 3' sowie zwischen letzterem und den Reifenflanken 6'.

### Bezugsziffernliste

- 1: ....................... Grundkörper
- 2, 2': .................. Bodenteil
- 3, 3': .................. Elastikteil
- 4, 4': .................. zugfester Kern
- 5, 5': .................. Laufflächenteil
- 6, 6': .................. seitliche Reifenflanke

## Patentansprüche

1. Verfahren zur Herstellung eines Vollgummireifens für eine mobile Arbeitsmaschine, aus einem Grundkörper (1) aus einem radial inneren, mit einer Felge in Kontakt kommenden Bodenteil (2) und einem radial äußeren Elastikteil (3) sowie mit einem Laufflächenteil (5) und zwei seitlichen Reifenflanken (6), welche zumindest den Elastikteil (3) seitlich bedecken, wobei der Bodenteil (2) und der Elastikteil (3) jeweils durch ein mehrlagiges Wickeln einer kalandrierten Kautschukmischung aufgebaut werden, und wobei der Laufflächenteil (5) und die beiden seitlichen Reifenflanken (6) ebenfalls aus Kautschukmischungen gebildet werden,
**dadurch gekennzeichnet,**
**dass** der Vollgummireifen in einem zweistufigen Aufbauverfahren hergestellt wird, wobei in der ersten Stufe der Grundkörper (1) aufgebaut und vulkanisiert wird, wobei in der zweiten Stufe der vulkanisierte Grundkörper (1) mit dem Laufflächenteil (5) und den seitlichen Reifenflanken (6) komplettiert wird und anschließend der Reifen nochmals vulkanisiert wird.

2. Verfahren zur Herstellung eines Vollgummireifens nach Anspruch 1, **dadurch gekennzeichnet, dass** in der zweiten Stufe auf den vulkanisierten Grundkörper (1) der Laufflächenteil (5) durch ein mehrlagiges Wickeln einer kalandrierten Kautschukmischung aufgebaut wird, die seitlichen Reifenflanken (6) angedrückt werden und anschließend der komplett aufgebaute Reifen in einer Heizform vulkanisiert wird.

3. Verfahren zur Herstellung eines Vollgummireifens nach Anspruch 1, **dadurch gekennzeichnet, dass** in der zweiten Stufe der vulkanisierte Grundkörper (1) in eine Einspritzpresse eingebracht wird, mit dem Laufflächenteil (5) und den seitlichen Reifenflanken (6) durch Einspritzen einer Kautschukmischung komplettiert wird und anschließend vulkanisiert wird.

4. Verfahren zur Herstellung eines Vollgummireifens nach einem der Ansprüche 1 bis 3, **dadurch gekennzeichnet, dass** der in der ersten Stufe aufgebaute Grundkörper (1) vorvulkanisiert wird.

5. Verfahren zur Herstellung eines Vollgummireifens nach einem der Ansprüche 1 bis 3, **dadurch gekennzeichnet, dass** der in der ersten Stufe aufgebaute Grundkörper (1) ausvulkanisiert wird.

6. Vollgummireifen, welcher gemäß dem Verfahren nach einem oder mehreren der Ansprüche 1 bis 5 hergestellt ist.

7. Grundkörper (1) zur Herstellung eines Vollgummireifens, welcher einen Bodenteil (2), einen Elastikteil (3), einen Laufflächenteil (5) und seitliche Reifenflanken (6) aufweist, welche Bestandteile aus Gummimaterialien bestehen,
**dadurch gekennzeichnet,**
**dass** der Grundkörper (1) ein separates Bauteil ist, welches aus dem Bodenteil (2) und dem Elastikteil (3) besteht und vulkanisiert ist.

8. Grundkörper nach Anspruch 7, **dadurch gekennzeichnet, dass** er vorvulkanisiert ist.

9. Grundkörper nach Anspruch 7, **dadurch gekennzeichnet, dass** er ausvulkanisiert ist

10. Grundkörper nach einem der Ansprüche 7 bis 9, **dadurch gekennzeichnet, dass** der Bodenteil (2) zumindest ein in Umfangsrichtung umlaufendes zugfestes Insert enthält.

11. Grundkörper nach einem der Ansprüche 7 bis 10, **dadurch gekennzeichnet, dass** der Bodenteil (2) und/oder der Elastikteil (3) recyceltes Gummimaterial enthalten bzw. enthält.

## Claims

1. Process for producing an all-rubber tire for a piece of mobile machinery, composed of a main body (1) composed of a radially inner base portion (2) that comes into contact with a wheel rim and a radially outer elastic portion (3), and having a tread portion (5) and two lateral tire flanks (6) which cover the sides at least of the elastic portion (3), where the base portion (2) and the elastic portion (3) are each constructed by multilayer winding of a calendered rubber mixture, and where the tread portion (5) and the two lateral tire flanks (6) are likewise formed from rubber mixtures,
**characterized in that**
the all-rubber tire is produced in a two-stage construction process,
where the main body (1) is constructed and vulcanized in the first stage,
where the vulcanized main body (1) is completed with the tread portion (5) and the lateral tire flanks (6) in the second stage,
and then the tire is vulcanized once again.

2. Process for producing an all-rubber tire according to Claim 1, **characterized in that**, in the second stage, the tread portion (5) is constructed on the vulcanized main body (1) by multilayer winding of a calendered rubber mixture, the lateral tire flanks (6) are pressed on and then the completely constructed tire is vulcanized in a heating mold.

3. Process for producing an all-rubber tire according to Claim 1, **characterized in that**, in the second stage, the vulcanized main body (1) is introduced into an injection press, is completed with the tread portion (5) and the lateral tire flanks (6) by injection of a rubber mixture, and is then vulcanized.

4. Process for producing an all-rubber tire according to any of Claims 1 to 3, **characterized in that** the main body (1) constructed in the first stage is subjected to preliminary vulcanization.

5. Process for producing an all-rubber tire according to any of Claims 1 to 3, **characterized in that** the main body (1) constructed in the first stage is subjected to full vulcanization.

6. All-rubber tire produced by the process according to one or more of Claims 1 to 5.

7. Main body (1) for production of an all-rubber tire, having a base portion (2), an elastic portion (3), a tread portion (5) and lateral tire flanks (6), which constituents consist of rubber materials,
**characterized in that**
the main body (1) is a separate component which consists of the base portion (2) and the elastic portion (3) and has been vulcanized.

8. Main body according to Claim 7, **characterized in that** it has been subjected to preliminary vulcanization.

9. Main body according to Claim 7, **characterized in that** it has been subjected to full vulcanization.

10. Main body according to any of Claims 7 to 9, **characterized in that** the base portion (2) comprises at least one circumferential insert of high tensile strength that runs in circumferential direction.

11. Main body according to any of Claims 7 to 10, **characterized in that** the base portion (2) and/or the elastic portion (3) comprise(s) recycled rubber material.

## Revendications

1. Procédé de fabrication d'un pneu plein pour une machine de travail mobile, à partir d'un corps de base (1) composé d'une partie inférieure (2) radialement intérieure, venant en contact avec une jante, et d'une partie élastique (3) radialement extérieure, et comprenant une partie bande de roulement (5) et deux flancs latéraux de pneu (6), lesquels recouvrent latéralement au moins la partie élastique (3), la partie inférieure (2) et la partie élastique (3) étant construites chacune par un enroulement multicouche d'un mélange de caoutchouc calandré, et la partie bande de roulement (5) et les deux flancs latéraux de pneu (6) étant également formés à partir de mélanges de caoutchouc,
**caractérisé en ce que**
le pneu plein est fabriqué dans un procédé de construction à deux étapes,
dans la première étape, le corps de base (1) étant construit et vulcanisé,
dans la deuxième étape, le corps de base vulcanisé (1) étant complété par la partie bande de roulement (5) et les flancs latéraux de pneu (6), puis le pneu étant encore vulcanisé.

2. Procédé de fabrication d'un pneu plein selon la revendication 1, **caractérisé en ce que**, dans la deuxième étape, la partie bande de roulement (5) est construite sur le corps de base vulcanisé (1) par un enroulement multicouche d'un mélange de caoutchouc calandré, les flanc latéraux de pneu (6) sont pressés, puis le pneu complètement construit est vulcanisé dans un moule chaud.

3. Procédé de fabrication d'un pneu plein selon la revendication 1, **caractérisé en ce que**, dans la deuxième étape, le corps de base vulcanisé (1) est introduit dans une presse à injection, est complété par la partie bande de roulement (5) et les flanc latéraux de pneu (6) par injection d'un mélange de caoutchouc, puis est vulcanisé.

4. Procédé de fabrication d'un pneu plein selon l'une quelconque des revendications 1 à 3, **caractérisé en ce que** le corps de base (1) construit dans la première étape est pré-vulcanisé.

5. Procédé de fabrication d'un pneu plein selon l'une quelconque des revendications 1 à 3, **caractérisé en ce que** le corps de base (1) construit dans la première étape est entièrement vulcanisé.

6. Pneu plein, qui est fabriqué par le procédé selon une ou plusieurs des revendications 1 à 5.

7. Corps de base (1) pour la fabrication d'un pneu plein, qui comprend une partie inférieure (2), une partie élastique (3), une partie bande de roulement (5) et des flancs latéraux de pneu (6), lesquels constituants sont constitués de matériaux caoutchouteux,
**caractérisé en ce que**
le corps de base (1) est un composant séparé, qui est constitué par la partie inférieure (2) et la partie élastique (3), et vulcanisé.

8. Corps de base selon la revendication 7, **caractérisé en ce qu'**il est pré-vulcanisé.

9. Corps de base selon la revendication 7, **caractérisé en ce qu'**il est entièrement vulcanisé.

10. Corps de base selon l'une quelconque des revendications 7 à 9, **caractérisé en ce que** la partie inférieure (2) contient au moins un insert résistant à la traction circonférentiel dans la direction périphérique.

11. Corps de base selon l'une quelconque des revendications 7 à 10, **caractérisé en ce que** la partie inférieure (2) et/ou la partie élastique (3) contiennent ou contient un matériau caoutchouteux recyclé.
